# EUROPÄISCHE PATENTSCHRIFT

(11) **EP 3 098 141 B1**
(45) Veröffentlichungstag und Bekanntmachung des Hinweises auf die Patenterteilung: **13.12.2017**
(21) Anmeldenummer: 15169184.7
(22) Anmeldetag: 26.05.2015
(51) Int. Cl.: B62D 21/11, B62D 3/12

(54) **VORDERACHSTRÄGER MIT ANBINDUNGSVORRICHTUNG FÜR EIN LENKUNGSGEHÄUSE**
FRONT AXLE CARRIER HAVING CONNECTING DEVICE FOR A STEERING HOUSING
SUPPORT D'AXE AVANT DOTÉ D'UN DISPOSITIF DE LIAISON POUR UN BOÎTIER DE DIRECTION

(43) Veröffentlichungstag der Anmeldung: 30.11.2016
(73) Patentinhaber: Autotech Engineering Deutschland GmbH, 33647 Bielefeld (DE)
(72) Erfinder: Dipl.-Ing. Haselhorst, Kai, 33775 Versmold (DE)
(74) Vertreter: Cohausz & Florack

(56) Entgegenhaltungen:
- EP-A2- 1 630 073
- DE-A1-102013 011 546
- FR-A1- 3 000 933

## Beschreibung

Die Erfindung betrifft einen Vorderachsträger für ein Kraftfahrzeug, mit Längsträgern und einem die Längsträger miteinander verbindenden Querträger, wobei der Querträger als Hohlkörper ausgebildet und mit mindestens einer Anbindungsvorrichtung zur Anbindung eines Lenkungsgehäuses versehen ist. Die EP 1 630 073 A2 offenbart einen solchen Vorderachsträger. Unter dem Begriff "Längsträger" werden hier Tragelemente oder Abschnitte von Tragelementen des Vorderachsträgers verstanden, die sich im montierten Zustand des Vorderachsträgers im Wesentlichen entlang der Längsachse des betreffenden Kraftfahrzeuges erstrecken.
Derartige Vorderachsträger (auch als Hilfsrahmen oder Fahrschemel bezeichnet) sind in vielfältigen Ausführungen bekannt. Sie sollen bei hoher Festigkeit und Steifigkeit möglichst leicht sein und weisen üblicherweise Lageraufnahmen für Radführungselemente und Anbindungsstellen für Lenkungsgehäuse (z.B. Lenkgetriebegehäuse) und andere Aggregate auf, um als Vormontageeinheit den Einbau kompletter Vorderachsmodule mit Antriebseinheiten zu ermöglichen.
Aus der DE 10 2009 040 821 B3 ist ein Vorderachsträger mit integriertem Lenkungsgehäuse bekannt, der eine ein Gehäuse eines Lenkgetriebes bildende Querstruktur aufweist, wobei als Längsträger ausgebildete Tragelemente, die Halter zur Lagerung von Radführungselementen aufweisen, durch Schweißverbindungen mit der Querstruktur verbunden sind. In einer Ausführungsform ist das jeweilige Tragelement aus miteinander verschweißten Blechschalen gebildet, wobei die Querstruktur aus einem mittleren Abschnitt der Blechschalen und einem aus Stahl gefertigten Lenkungsgehäuse gebildet ist. Dieser Vorderachsträger bietet im Bereich der Vorderachse einen Bauraumgewinn bei gleichzeitiger Gewichtsreduzierung.

Jedoch ist die Montage des Lenkgetriebes in das in den Vorderachsträger fest integrierte Lenkungsgehäuse relativ aufwendig.

Die EP 1 712 450 B1 offenbart einen Hilfsrahmen für Kraftfahrzeuge, mit seitlichen Hilfsrahmen-Längsträgern, die über einen Querträger miteinander verbunden sind. Zwischen den Längsträgern ist ein flächiges Versteifungselement angeordnet, das als Sandwichbauteil ausgebildet ist. Auch ist an dem Hilfsrahmen ein ein Lenkgetriebe enthaltendes Lenkungsgehäuse montiert. Die Befestigung des Lenkungsgehäuses erfolgt an vier Stellen, wobei zwei dieser Befestigungsstellen an dem Querträger und die anderen beiden Befestigungsstellen an mit den Längsträgern verbundenen Lenkerkonsolen ausgebildet sind. Die Befestigungsstellen sind dabei derart angeordnet, dass die Längsachsen der montierten Befestigungsschrauben quer oder im Wesentlichen senkrecht zu einer Fahrzeughochachse (Z-Achse) verlaufen, wohingegen die Befestigungsstellen für das flächige Versteifungselement derart angeordnet sind, dass dessen Befestigungsschrauben von unten zugeführt und die Längsachsen dieser Befestigungsschrauben im montierten Zustand im Wesentlichen parallel zur Fahrzeughochachse verlaufen. Dieser Hilfsrahmen ist insbesondere hinsichtlich einer günstigen Montage des Lenkungsgehäuses verbesserungsfähig.

In der DE 10 2010 033 333 A1 ist ein Hilfsrahmen dargestellt, der zwei Längsträger und zumindest einen Querträger aufweist und an dem ferner Befestigungsstellen für Radaufhängungselemente und Aggregatelager vorgesehen sind. Der Querträger ist plattenförmig oder flächig ausgebildet und mit einem Lenkgetriebegehäuse versteift. Zusätzlich ist der Hilfsrahmen mit einem zwischen den Längsträgern verlaufenden Versteifungselement versehen, das mit dem Querträger fest verbunden ist. In einer Ausführungsform ist das Lenkgetriebegehäuse zu seiner Festlegung am Querträger mit gegenüberliegenden Gehäusebereichen jeweils zwischen den Längsträgern und dem Querträger angeordnet, wobei Befestigungsschrauben vorgesehen sind, die vom Querträger oder vom Längsträger aus durch entsprechende Gehäusebereiche hindurch in den jeweiligen Längsträger bzw. in den Querträger einschraubbar sind.

Das Lenkgetriebegehäuse ist dabei, in Fahrzeughochachsenrichtung gesehen, von oben her auf den Querträger aufgesetzt.

Der Erfindung liegt die Aufgabe zugrunde, einen Vorderachsträger der eingangs genannten zu schaffen, der bei geringem Gewicht eine hohe Biegesteifigkeit aufweist sowie eine montagegünstige Anbindung des Lenkungsgehäuses ermöglicht, indem letzteres - in Fahrzeughochachsenrichtung gesehen - von unten her dem Querträger zugeführt und daran angebunden werden kann.

Diese Aufgabe wird durch einen Vorderachsträger mit den in Anspruch 1 angegebenen Merkmalen gelöst. Bevorzugte und vorteilhafte Ausgestaltungen des erfindungsgemäßen Vorderachsträgers sind in den Unteransprüchen angegeben.

Zur Lösung der genannten Aufgabe wird die Anbindungsvorrichtung aus einem eine Einbuchtung definierenden Metallformteil gebildet, welches in eine an der Vorder- oder Rückseite des Querträgers angeordnete Vertiefung eingesetzt und mit dem Querträger verschweißt ist, unterseitig und entlang eines mindestens 20 mm, vorzugsweise mindestens 30 mm betragenden Höhenabschnittes offen ist, und am oberen Ende des Höhenabschnittes eine Öffnung, vorzugsweise ein Loch zur Aufnahme eines mit dem Lenkungsgehäuse verbundenen oder verbindbaren Befestigungselements aufweist.

Der erfindungsgemäße Vorderachsträger, der auch als Hilfsrahmen oder Fahrschemel bezeichnet werden kann, erlaubt eine montagegünstige Anbindung des Lenkungsgehäuses, und zwar insbesondere dadurch, dass das Lenkungsgehäuse von unten her dem Querträger zugeführt und daran angebunden werden kann. Hierzu kann an dem Lenkungsgehäuse beispielsweise mindestens ein Befestigungsarm oder eine Befestigungslasche ausgebildet oder angeschweißt sein, der/die bei der Montage des Lenkungsgehäuses entlang der Einbuchtung des mit dem Querträger verschweißten Metallformteils bewegt wird, um schließlich nahe der Öffnung bzw. dem Loch zur Aufnahme des mit dem Lenkungsgehäuse verbundenen oder verbindbaren Befestigungselements, beispielsweise einer Gewindebuchse, Mutter oder Schraube, positioniert zu sein. Durch das eine Einbuchtung aufweisende Metallformteil und dessen Schweißverbindung mit dem Querträger wird eine erhebliche Versteifung des Querträgers und damit des Vorderachsträgers erzielt.

Der als Hohlkörper ausgebildete Querträger weist vorzugsweise ein geschlossenes Profil auf. Der Querträger kann hierzu beispielsweise aus zwei miteinander verbundenen L-Profilen, einem C-Profil oder U-Profil mit einer dessen Schenkel verbindenden Abdeckung oder einem Rohrprofil, beispielsweise einem Vierkant-Hohlprofil zusammengesetzt sein bzw. bestehen. Insbesondere kann der Querträger aus einer oberen Blechschale und einer damit verbundenen unteren Blechschale zusammengesetzt sein. Das Metallformteil ist mit mindestens einem Profilteil bzw. mindestens einer Blechschale des Querträgers verschweißt. Vorzugsweise ist das Metallformteil sowohl mit einer oberen Blechschale als auch mit einer unteren Blechschale des Querträgers verschweißt.

Durch die an der Vorder- oder Rückseite des Querträgers angeordnete Vertiefung und das darin eingesetzte, eine Einbuchtung aufweisende Metallformteil ergeben sich zudem eine Platzersparnis bzw. eine Vergrößerung des nutzbaren Bauraums an dem Vorderachsträger. Das Metallformteil und dessen erfindungsgemäße Integration in den Querträger lassen sich kostengünstig realisieren. Das Metallformteil lässt sich einteilig ausführen oder aus relativ wenigen Einzelteilen, insbesondere nur zwei Einzelteilen herstellen. Eine feste und zuverlässige Verbindung des Metallformteils mit dem Querträger lässt sich durch eine einzelne oder wenige Schweißoperationen erzielen. Da der erfindungsgemäße Vorderachsträger nur relativ wenige Einzelteile zur Anbindung des Lenkungsgehäuses aufweist, ist er vergleichsweise leicht. Zudem ermöglicht seine hohe Biegesteifigkeit eine Reduzierung der Blechdicke mindestens eines Profilelements oder mindestens einer Blechschale des Querträgers und damit eine Gewichtsreduzierung.

Eine vorteilhafte Ausgestaltung der Erfindung ist dadurch gekennzeichnet, dass das Metallformteil in Form einer rinnenförmigen Schale, vorzugsweise einer Blechschale, ausgebildet ist. Die Schale kann dabei im Querschnitt betrachtet ein im Wesentlichen U-förmiges oder kreisbogenförmiges, insbesondere nahezu halbkreisförmiges Profil aufweisen. Ein solches Metallformteil lässt sich relativ einfach durch Umformen eines Blechzuschnitts herstellen und verleiht dem Querträger nach der Schweißverbindung mit demselben eine hervorragende Biegesteifigkeit bei vergleichsweise geringem Gewicht.

Eine weitere vorteilhafte Ausgestaltung der Erfindung ist dadurch gekennzeichnet, dass das Metallformteil an seinem unteren Ende einen Flansch aufweist. Der Flansch versteift das Metallformteil. Insbesondere bietet der Flansch die Möglichkeit, die in dem Querträger an dessen Vorder- oder Rückseite ausgebildete Vertiefung, in welche das Metallformteil eingesetzt wird, mit etwas größerem Spiel gegenüber dem Metallformteil auszubilden, so dass eine schwimmende Einstellung des Metallformteils relativ zu dem Querträger und damit ein einfacher Toleranzausgleich in x/y-Richtung möglich ist. Das Metallformteil kann somit erforderlichenfalls mit einem radialen Spiel, das für einen größeren Toleranzausgleich ausreicht, in die Vertiefung eingesetzt sein. Der Flansch untergreift dabei die Vertiefung des Querträgers, beispielsweise einen entsprechenden Ausschnitt einer unteren Blechschale oder eines unteren Profilteils des Querträgers, und dient als Schweißverbindungsabschnitt des in die Vertiefung eingesetzten Metallformteils.

Nach einer weiteren vorteilhaften Ausgestaltung der Erfindung ist das Metallformteil durch Teilung einer Metallhülse oder eines Blechnapfes hergestellt. Bei der Metallhülse kann es sich insbesondere um eine Flanschhülse handeln. Ebenso kann der Blechnapf einen entsprechenden radial abstehenden Flansch aufweisen. Diese Ausgestaltung ermöglicht eine besonders kostengünstige Herstellung des Metallformteils, da aus einer einteiligen Metallhülse bzw. einem einteiligen Blechnapf jeweils zwei Metallformteile erlangt werden können. Die Herstellung des Metallformteils aus einem einteiligen Blechnapf bietet ferner den Vorteil, dass der Boden des Blechnapfes genutzt werden kann, um darin das Loch bzw. die Öffnung zur Aufnahme eines mit dem Lenkungsgehäuse verbundenen oder verbindbaren Befestigungselements vorzusehen. Es ist somit keine zusätzliche Verbindungsoperation, beispielsweise Schweißoperation, erforderlich, um an dem Metallformteil ein Aufnahmeelement mit dem Loch bzw. der Öffnung zur Aufnahme eines mit dem Lenkungsgehäuse verbundenen oder verbindbaren Befestigungselements anzubringen. Andererseits bietet ein solches Aufnahmeelement, das beispielsweise in Form einer ein Loch aufweisenden Metallplatte (Metallscheibe) separat von der Metallhülse bzw. der rinnenförmigen Schale hergestellt wird und im montierten Zustand letztere radial übergreift, die Möglichkeit, relativ zu dem Querträger oder zu dem an dem Querträger angeschweißten Metallformteil schwimmend positioniert zu werden, wodurch wiederum ein einfacher Toleranzausgleich in x/y-Richtung möglich ist.

Eine Ausgestaltung des erfindungsgemäßen Vorderachsträgers sieht insbesondere vor, dass das Loch zur Aufnahme des Befestigungselements in einer deckelartigen Metallplatte (Metallscheibe) ausgebildet ist, die mit dem Metallformteil fest verbunden ist. Die Metallplatte (Metallscheibe) und der Querträger sind dabei vorzugsweise miteinander verschweißt. Die Metallplatte (Metallscheibe) kann dabei im Wesentlichen eben ausgebildet sein. Sie erfordert somit keinen zusätzlichen Umformschritt. Vorzugsweise weist die Metallplatte jedoch einen Kragen auf, der sich zumindest entlang einer Teillänge ihres Umfangs erstreckt.

Das dem Lenkungsgehäuse zugeordnete Befestigungselement kann fest oder lösbar mit der Anbindungsvorrichtung des erfindungsgemäßen Vorderachsträgers verbunden sein. Nach einer vorteilhaften Ausgestaltung ist das Befestigungselement in Form einer Mutter oder Gewindebuchse ausgeführt. Die Mutter oder Gewindebuchse ist dabei in das Loch der Anbindungsvorrichtung eingesetzt oder fluchtend zu dem Loch angeordnet und jeweils mit dem Metallformteil bzw. dem oben genannten Aufnahmeelement (Metallplatte) verbunden, beispielsweise durch eine Schweiß- oder Schraubverbindung.

Eine weitere vorteilhafte Ausgestaltung des erfindungsgemäßen Vorderachsträgers ist dadurch gekennzeichnet, dass der Querträger oberseitig im Bereich der Vertiefung einen Absatz aufweist. Der Absatz erhöht ebenfalls die Biegesteifigkeit des Vorderachsträgers bzw. seines Querträgers. Der Absatz ist dabei beispielsweise durch eine wulst- oder raupenförmige Erhebung des Querträgers definiert. Diese Maßnahme zur Verbesserung der Biegesteifigkeit lässt sich beim Formen einer oberen Blechschale oder eines oberen Blechteils des Querträgers günstig realisieren. Vorzugsweise weist die wulst- oder raupenförmige Erhebung einen geschwungenen Längsverlauf auf, da hierdurch die Biegesteifigkeit zugleich in mehreren Richtungen verbessert wird.

Nach einer besonders bevorzugten Ausgestaltung ist der Querträger des erfindungsgemäßen Vorderachsträgers mit mindestens zwei Anbindungsvorrichtungen der voranstehend genannten Art versehen. Hierdurch lässt sich nicht nur eine sehr stabile und zuverlässige Anbindung des Lenkungsgehäuses an dem Querträger des Vorderachsträgers erzielen, sondern zudem die Biegesteifigkeit des Querträgers bzw. Vorderachsträgers bei geringem Bauteilgewicht weiter verbessern. Zusätzliche Anbindungsvorrichtungen für das Lenkungsgehäuse, zum Beispiel in Form von Konsolen, sind vorzugsweise an den Längsträgern angebracht.

Hinsichtlich einer hohen Biegesteifigkeit des Querträgers bzw. Vorderachsträgers bei geringem Bauteilgewicht ist es auch vorteilhaft, wenn gemäß einer weiteren Ausgestaltung der Erfindung das Metallformteil und mindestens eine Blechschale und/oder mindestens ein Profilteil des Querträgers aus Stahlblech unterschiedlicher Dicke und/oder unterschiedlich Werkstoffgüte hergestellt sind. Hierdurch lässt sich die Biegesteifigkeit des Querträgers bzw. Vorderachsträgers bei konstantem oder sogar verringertem Bauteilgewicht optimieren.

Nachfolgend wird die Erfindung anhand einer ein Ausführungsbeispiel darstellenden Zeichnung näher erläutert. Es zeigen:
- Fig. 1: einen erfindungsgemäßen Vorderachsträger ohne Lenkungsgehäuse in einer perspektivischen Darstellung;
- Fig. 2: den Vorderachsträger aus Fig. 1 ohne Lenkungsgehäuse in Draufsicht;
- Fig. 3: einen gegenüber Fig. 1 vergrößerten Abschnitt des Vorderachsträgers mit dessen Querträger; und
- Fig. 4: den Vorderachsträger aus Fig. 1 mit daran montiertem Lenkungsgehäuse sowie montierten Radführungselementen in Unteransicht.

In der Zeichnung ist ein Vorderachsträger (Hilfsrahmen) 1 für ein Kraftfahrzeug gezeigt, der Längsträger 2, 3 und einen die Längsträger miteinander verbindenden Querträger 4 aufweist. Der Querträger 4 ist als Hohlkörper ausgebildet. Er ist hier zum Beispiel aus einer oberen Blechschale 4.1 und einer unteren Blechschale 4.2 gebildet. Die obere Blechschale 4.1 sowie die untere Blechschale 4.2 weisen beispielsweise jeweils ein im Wesentlichen L-förmiges Querschnittsprofil auf. Die Längsträger 2, 3 sind vorzugsweise ebenfalls als Hohlkörper ausgebildet. Sie sind beispielsweise jeweils aus einer oberen Blechschale und einer unteren Blechschale aufgebaut, die miteinander verschweißt sind.

Des Weiteren ist der Vorderachsträger 1 an seinem vorderen Ende mit einer die Längsträger 2, 3 verbindenden Traverse 5 versehen. Die Traverse 5 ist beispielsweise aus einem Rohr und an dessen Enden angeschweißten Blechformteilen 6, 7 zusammengesetzt.

Ferner weist der Vorderachsträger 1 ein Träger- und Versteifungselement 8 auf, das beispielsweise aus einer oberen Blechschale 8.1 und einer damit durch Schweißen verbundenen unteren Blechschale 8.2 ausgeführt ist. Die obere Blechschale 8.1 erstreckt sich entlang eines mittleren Abschnitts des Querträgers 4 und grenzt an diesen unmittelbar an. Die Enden der unteren Blechschale 8.2 sind mit den Längsträgern 2, 3 verbunden. An den Längsträgern 2, 3 sind Halter oder Konsolen 9, 10 zur Lagerung des Fahrzeugmotors oder von Antriebskomponenten angebracht. Außerdem sind an den Längsträgern 2, 3 Konsolbleche 11, 12 zur Lagerung von Komponenten einer Fahrwerksfederung angebracht, wobei diese Konsolbleche 11, 12 auch mit dem Querträger 4 und der oberen Blechschale 8.1 des Träger- und Versteifungselements 8 verschweißt sind.

An dem Vorderachsträger (Hilfsrahmen) 1 sind Halterungen zur Lagerung von Radführungselementen 13, 14, insbesondere Querlenkern ausgebildet. Die Halterungen sind unter anderem an den in Fahrrichtung gesehen vorderen Enden der Längsträger 2, 3 bzw. im Bereich der Blechformteile 6, 7 der Traverse 5 angeordnet. Des Weiteren sind die Enden der oberen Blechschale 4.1 und der unteren Blechschale 4.2 des Querträgers so ausgebildet, dass sie gabelförmige Halterungen zur drehbeweglichen Lagerung eines Querlenkers 13 definieren. Die jeweilige gabelförmige Halterung besteht dabei aus einem Ende der oberen Blechschale 4.1 und einem Ende der unteren Blechschale 4.2.

Zur Anbindung eines Lenkungsgehäuses 15, z.B. eines Lenkgetriebegehäuses oder Lenkungszylinders, ist der Vorderachsträger 1 mit mehreren, vorzugsweise vier Anbindungsvorrichtungen 16.1, 16.2, 17.1, 17.2 versehen. Die Anbindungsvorrichtungen 16.1, 16.2, 17.1, 17.2 sind für eine im Wesentlichen vertikale Fertigungsmontage des Lenkungsgehäuses 15 in positiver Z-Richtung ausgelegt. Anders ausgedrückt, sind die dem Lenkungsgehäuse 15 zugeordneten Anbindungsvorrichtungen 16.1, 16.2, 17.1, 17.2 so ausgebildet und angeordnet, dass das Lenkungsgehäuse 15 von unten her - in Fahrzeughochachsenrichtung betrachtet - dem Vorderachsträger 1 zugeführt und daran montiert werden kann. Zwei Anbindungsvorrichtungen 16.1, 16.2 sind an dem Querträger 4 und zwei weitere Anbindungsvorrichtungen 17.1, 17.2 an den Längsträgern 2, 3 vorgesehen. Die vier Anbindungsvorrichtungen 16.1, 16.2, 17.1, 17.2 definieren eine 4-Punkt-Lenkungsanbindung. Die Anbindungsvorrichtungen 17.1, 17.2 an den Längsträgern 2, 3 sind beispielsweise in Form von Konsolblechen ausgeführt, die jeweils mit einer Gewindebohrung oder Mutter 18 versehen und an einem der Längsträger angeschweißt sind. Die an dem Querträger 4 angebrachten Anbindungsvorrichtungen 16.1, 16.2 sind jeweils aus einem eine Einbuchtung definierenden Metallformteil 19 gebildet, das in eine in die Vorderseite des Querträgers 4 eingebrachte Vertiefung eingesetzt und mit der oberen Blechschale 4.1 und der unteren Blechschale 4.2 stoffschlüssig verbunden, vorzugsweise verschweißt ist. Die in dem Querträger 4 ausgebildete Vertiefung, in welcher das Metallformteil 19 angeordnet ist, kann auch als Ausschnitt oder Aussparung bezeichnet werden.

Das in den Querträger 4 integrierte Metallformteil 19 ist an seiner Unterseite und entlang eines mindestens 20 mm betragenden Höhenabschnittes, welcher sich von einer Unterseite der unteren Blechschale 4.2 bis vorzugsweise zu einer Oberseite der oberen Blechschale 4.1 erstreckt, offen. Am oberen Ende des offenen Höhenabschnittes weist das Metallformteil 19 eine Öffnung 20, beispielsweise ein Loch zur Aufnahme bzw. fluchtenden Anordnung eines mit dem Lenkungsgehäuse 15 verbindbaren Befestigungselements 21 auf.

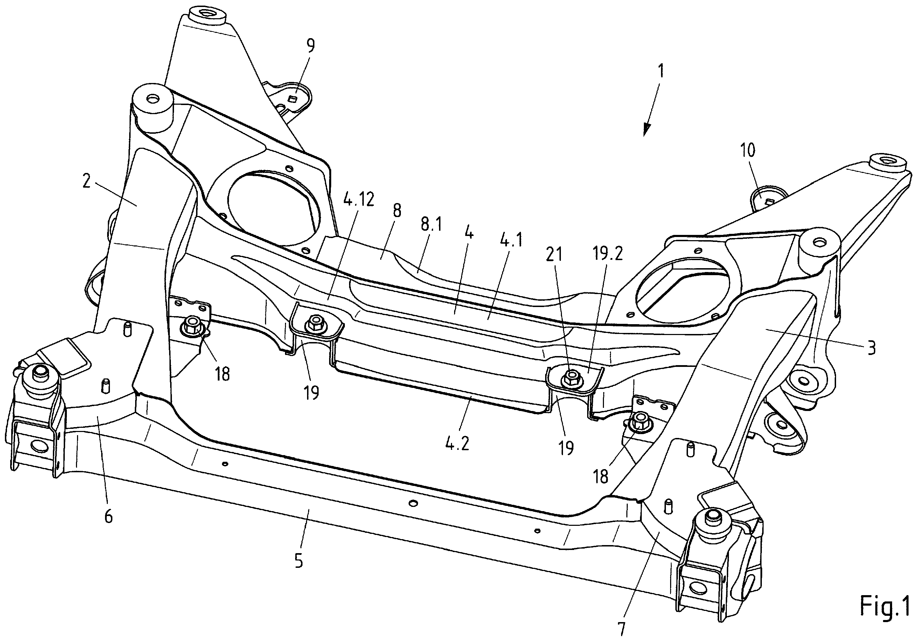

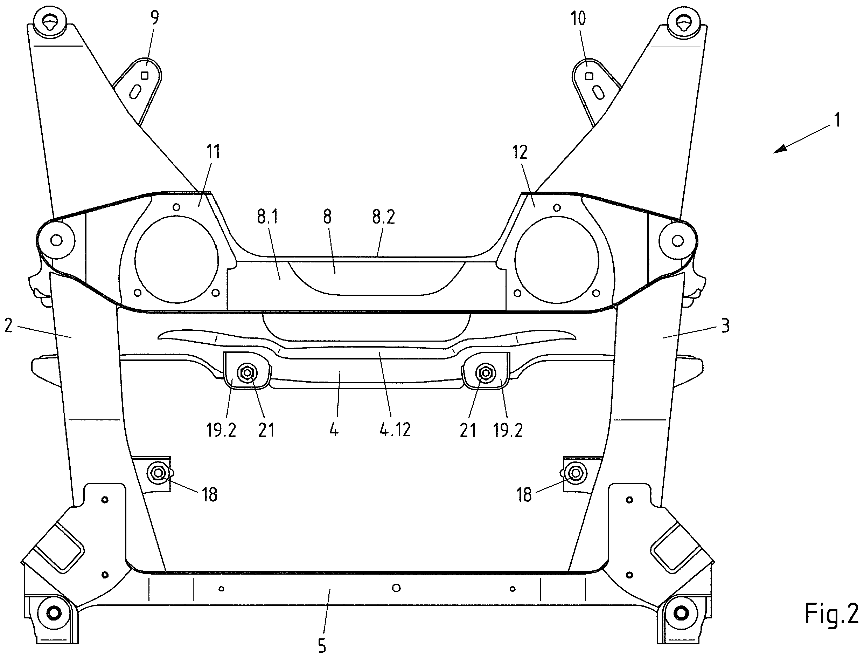

In dem in der Zeichnung dargestellten Ausführungsbeispiel ist das Metallformteil 19 in Form einer rinnenförmigen Schale ausgebildet. Im Querschnitt betrachtet weist das Metallformteil 19 ein U-förmiges oder in etwa halbkreisförmiges Profil auf. An seinem unteren Ende ist es mit einem Flansch 19.1 versehen, der die untere Blechschale 4.2 des Querträgers 4 untergreift. Auf seinem oberen Ende ist nach Art eines Deckels eine Metallplatte (Metallscheibe) 19.2 angeordnet, die mit der Öffnung 20, vorzugsweise einem Loch zur Aufnahme des mit dem Lenkungsgehäuse 15 verbindbaren Befestigungselements 21 versehen ist. Die Metallplatte 19.2 ragt radial über den rinnenförmigen Teil 19.3 des Metallformteils 19 hinaus und ist mit diesem und/oder der oberen Blechschale 4.1 des Querträgers 4 fest verbunden, beispielsweise verschweißt. Die Metallplatte 19.2 kann an ihrem Umfang einen nach oben vorstehenden Kragen aufweisen, der sich - wie in den Figuren 1 - 3 zu erkennen ist - über eine Teillänge des Plattenumfangs erstreckt. Der Längenabschnitt des Umfangs der Metallplatte 19.2, an welchem der Kragen nicht vorgesehen ist, dient vorzugsweise als Fügekante zum Verschweißen der Metallplatte 19.2 mit dem Querträger 4.

Das in der Öffnung 11 der Metallplatte 19.2 aufgenommene bzw. dort fluchtend angeordnete Befestigungselement 21 besteht beispielsweise aus einer Gewindebuchse oder einer Mutter. Die Mutter 21 ist fest mit der Metallplatte 19.2 verbunden, zum Beispiel verschweißt. Die Gewindebuchse oder Mutter 21 weist vorzugsweise einen Flansch auf, mit dem sie an der Metallplatte 19.2 anliegt.

Zur Herstellung der Metallformteile 19 der Anbindungsvorrichtungen 16.1, 16.2 kann beispielsweise ein Rohr oder eine Metallhülse verwendet werden, das/die in axialer Richtung geteilt, insbesondere halbiert wird. Als Metallhülse wird dabei vorzugsweise eine Flanschhülse verwendet. Durch das Einschweißen des jeweiligen rinnenförmigen Metallformteils 19 in den Querträger 4 werden dessen obere Blechschale 4.1 und untere Blechschale 4.2 fest miteinander verbunden und der Querträger 4 erheblich versteift.

Anstelle eines Rohres oder einer Metallhülse, insbesondere einer Flanschhülse, das/ die geteilt, beispielsweise halbiert, und anschließend mit einer deckelartigen Metallplatte 19.2 versehen wird, kann zur Herstellung eines Metallformteils 19 auch ein Blechnapf, vorzugsweise ein Blechnapf mit einstückig angeformtem Flansch verwendet werden. In diesem Fall bilden der rinnenförmige Teil 19.3, der Flansch 19.1 und der deckelartige Teil 19.2 zusammen ein einteiliges Metallformteil 19, das für die Anbindung des Lenkungsgehäuses 15 in die vorderseitige Vertiefung (Aussparung) des Querträgers 4 eingeschweißt wird.

Besonders bevorzugt ist allerdings eine Ausführungsform gemäß dem in der Zeichnung dargestellten Ausführungsbeispiel, bei welcher der rinnenförmige Teil 19.3 des Metallformteils 19 mit einer die Öffnung 20 zur Aufnahme des Befestigungsmittels 21 aufweisenden Metallscheibe (Metallplatte) 19.2 versehen ist, welche den rinnenförmigen Teil 19.3 radial überragt. Denn eine solche Ausführungsform ermöglicht einen besonders einfachen Einbau der Anbindungsvorrichtung 16.1, 16.2 hinsichtlich der geforderten Toleranzen, wobei eine schwimmende Einstellung (Positionierung) der Metallscheibe 19.2 relativ zu dem rinnenförmigen Teil 19.3 bzw. dem Querträger 4 möglich ist.

Vorzugsweise ist die Vertiefung (Aussparung) des hohlen, aus den Blechschalen 4.1, 4.2 zusammengesetzten Querträgers 4, in welche das Metallformteil 19, z.B. der halbe Abschnitt einer in Axialrichtung geteilten Flanschhülse, eingesetzt ist, etwas weiter als das größte Außenmaß des Querschnittprofils des Metallformteils 19, so dass letzteres mit radialem Spiel in die Vertiefung (Aussparung) eingesetzt und somit vor dem Herstellen der Schweißverbindung relativ zu dem Querträger 4 schwimmend positioniert werden kann.

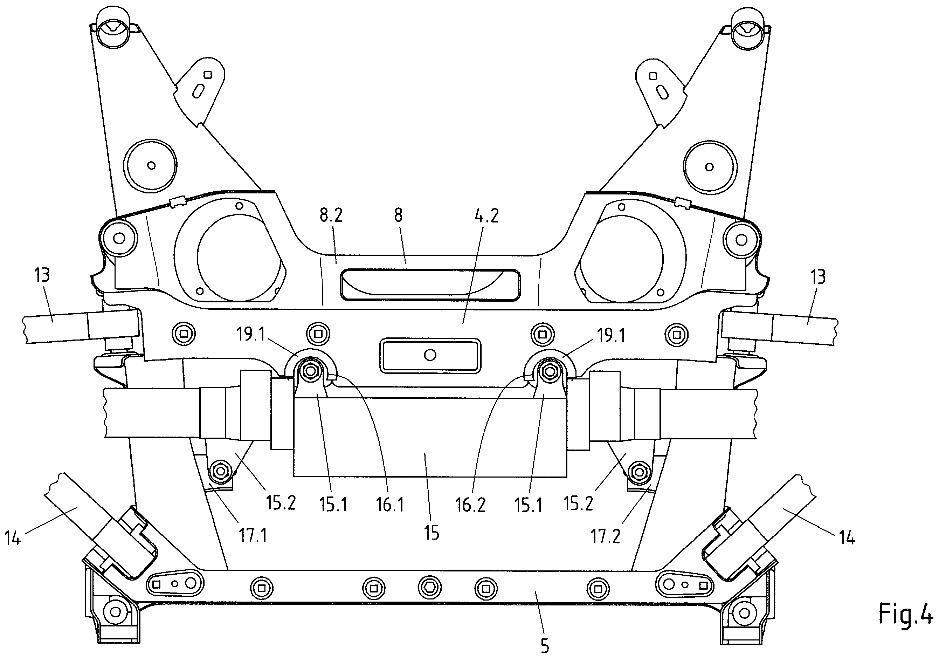

In die an den Konsolblechen 17.1, 17.2 angebrachten Muttern 18 und in die an den Metallformteilen angebrachten Gewindebuchsen oder Muttern 21 werden jeweils Schrauben eingedreht, die in Löcher oder Ausnehmungen eingesetzt sind, welche in an dem Lenkungsgehäuse 15 angebrachten Befestigungslaschen 15.1 bzw. vorgesehenen Befestigungsohren 15.2 ausgebildet sind (vgl. Fig. 4).

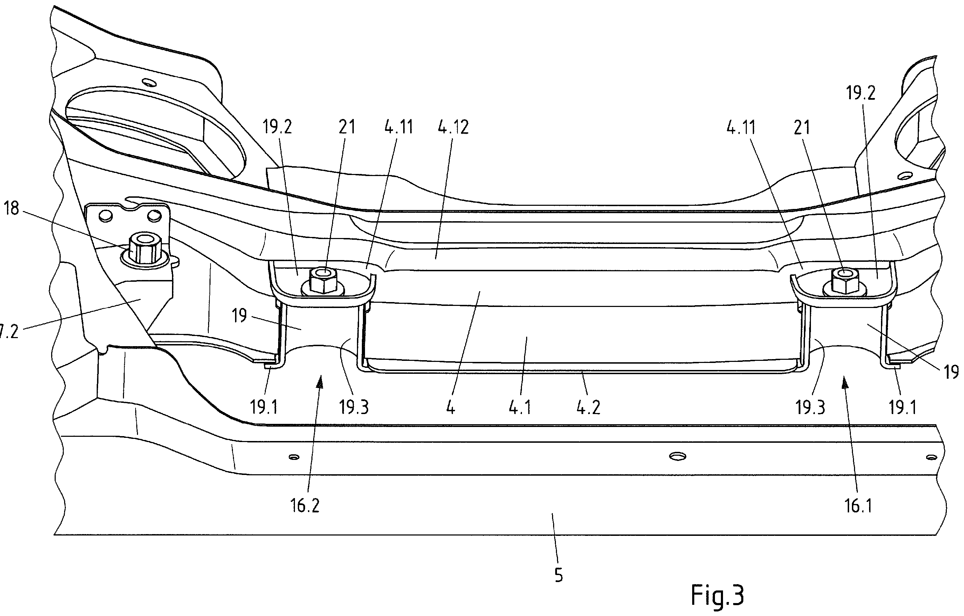

Des Weiteren ist insbesondere in Fig. 3 zu erkennen, dass die obere Blechschale 4.1 des Querträgers oberseitig im Bereich der Vertiefung (Aussparung) einen Absatz 4.11 aufweist. Der Absatz 4.11 trägt zu einer Versteifung des Querträgers 4 bei und ist durch eine wulst- oder raupenförmige Erhebung (Struktur) 4.12 der oberen Blechschale 4.1 definiert. Die wulst- oder raupenförmige Erhebung 4.12 ist dabei durch einen geschwungenen Längsverlauf gekennzeichnet.

Die Metallformteile 19 einerseits und die obere Blechschale 4.1 oder die untere Blechschale 4.2 andererseits sind vorzugsweise aus Stahlblech unterschiedlicher Dicke und/oder unterschiedlicher Werkstoffgüte hergestellt, um die Biegesteifigkeit des Vorderachsträgers 1, insbesondere des Querträgers 4, bei geringem Gewicht zu optimieren. Auch oder alternativ können die obere Blechschale 4.1 und die untere Blechschale 4.2 aus Stahlblech unterschiedlicher Dicke und/oder unterschiedlicher Werkstoffgüte hergestellt sein.

Die Blechdicken der zur Herstellung des Vorderachsträgers 1 verwendeten Stahlbleche liegen vorzugsweise im Bereich von 1,5 mm bis 3,5 mm. Bei den Werkstoffgüten der verwendeten Stahlbleche kann es sich beispielsweise um Standardgüten wie S355MC und/oder S420MC aber auch um höher feste Stahlblechgüten handeln.

Die Ausführung der Erfindung ist nicht auf das in der Zeichnung dargestellte Ausführungsbeispiel beschränkt. Vielmehr sind zahlreiche Varianten denkbar, die auch bei einer von dem gezeigten Beispiel abweichenden Gestaltung von der in den beiliegenden Ansprüchen angegebenen Erfindung Gebrauch machen. Beispielsweise kann der als Hohlkörper ausgeführte Querträger 4 auch aus einem C-Profil oder U-Profil mit einer dessen Schenkel verbindenden Abdeckung oder einem Rohrprofil, insbesondere einem Vierkant-Hohlprofil zusammengesetzt sein bzw. bestehen.

## Patentansprüche

1. Vorderachsträger (1) für ein Kraftfahrzeug mit Längsträgern und einem die Längsträger (2, 3) miteinander verbindenden Querträger (4), wobei der Querträger als Hohlkörper ausgebildet und mit mindestens einer Anbindungsvorrichtung (16.1, 16.2) zur Anbindung eines Lenkungsgehäuses (15) versehen ist, **dadurch gekennzeichnet, dass** die Anbindungsvorrichtung (16.1, 16.2) aus einem eine Einbuchtung definierenden Metallformteil (19) gebildet ist, welches in eine an der Vorder- oder Rückseite des Querträgers (4) angeordnete Vertiefung eingesetzt und mit dem Querträger (4) verschweißt ist, unterseitig und entlang eines mindestens 20 mm betragenden Höhenabschnittes offen ist, und am oberen Ende des Höhenabschnittes eine Öffnung (20), vorzugsweise ein Loch zur Aufnahme eines mit dem Lenkungsgehäuse (15) verbundenen oder verbindbaren Befestigungselements (21) aufweist.

2. Vorderachsträger nach Anspruch 1, **dadurch gekennzeichnet, dass** das Metallformteil (19) in Form einer rinnenförmigen Schale ausgebildet ist.

3. Vorderachsträger nach Anspruch 1 oder 2, **dadurch gekennzeichnet, dass** das Metallformteil (19) an seinem unteren Ende einen Flansch (19.1) aufweist.

4. Vorderachsträger nach einem der Ansprüche 1 bis 3, **dadurch gekennzeichnet, dass** das Metallformteil (19) durch Teilung einer Metallhülse oder eines Blechnapfes hergestellt ist.

5. Vorderachsträger nach einem der Ansprüche 1 bis 4, **dadurch gekennzeichnet, dass** das Befestigungselement (21) fest oder lösbar mit der Anbindungsvorrichtung (16.1, 16.2) verbunden ist.

6. Vorderachsträger nach einem der Ansprüche 1 bis 5, **dadurch gekennzeichnet, dass** das Befestigungselement (21) in Form einer Mutter oder Gewindebuchse ausgeführt ist.

7. Vorderachsträger nach einem der Ansprüche 1 bis 6, **dadurch gekennzeichnet, dass** die Öffnung (20) zur Aufnahme des Befestigungselements (21) in einer deckelartigen Metallplatte (19.2) ausgebildet ist, die mit dem Metallformteil (19) fest verbunden ist.

8. Vorderachsträger nach Anspruch 7, **dadurch gekennzeichnet, dass** die Metallplatte (19.2) und der Querträger (4) miteinander verschweißt sind.

9. Vorderachsträger nach einem der Ansprüche 1 bis 8, **dadurch gekennzeichnet, dass** das Metallformteil (19) mit radialem Spiel in die Vertiefung des Querträgers (4) eingesetzt ist.

10. Vorderachsträger nach einem der Ansprüche 1 bis 9, **dadurch gekennzeichnet, dass** der Querträger (4) oberseitig im Bereich der Vertiefung einen Absatz (4.11) aufweist.

11. Vorderachsträger nach Anspruch 10, **dadurch gekennzeichnet, dass** der Absatz (4.11) durch eine wulst- oder raupenförmige Erhebung (4.12) des Querträgers (4) definiert ist.

12. Vorderachsträger nach Anspruch 11, **dadurch gekennzeichnet, dass** die wulst- oder raupenförmige Erhebung (4.12) einen geschwungenen Längsverlauf aufweist.

13. Vorderachsträger nach einem der Ansprüche 1 bis 12, **dadurch gekennzeichnet, dass** der Querträger (4) mit mindestens zwei Anbindungsvorrichtungen (16.1, 16.2) der genannten Art versehen ist.

14. Vorderachsträger nach einem der Ansprüche 1 bis 13, **dadurch gekennzeichnet, dass** der Querträger aus einer oberen Blechschale (4.1) und einer unteren Blechschale (4.2) gebildet ist.

15. Vorderachsträger nach Anspruch 14, **dadurch gekennzeichnet, dass** das Metallformteil (19) und mindestens eine Blechschale und/oder mindestens ein Profilteil des Querträgers (4) aus Stahlblech unterschiedlicher Dicke und/oder unterschiedlich Werkstoffgüte hergestellt sind.

## Claims

1. Front axle support (1) for a motor vehicle, comprising side members and a crossmember (4) interconnecting the side members (2, 3), the crossmember being in the form of a hollow body and being provided with at least one attachment device (16.1, 16.2) for attaching a steering system housing (15), **characterised in that** the attachment device (16.1, 16.2) is formed by a shaped metal part (19) which defines a recess, is inserted into a cavity arranged in the front or back of the crossmember (4), is open underneath and along a vertical portion of at least 20 mm, and comprises an opening (20), preferably a hole, at the upper end of the vertical portion, for receiving a fastening element (21) that is or can be connected to the steering system housing (15).

2. Front axle support according to claim 1, **characterised in that** the shaped metal part (19) is in the form of a channel-shaped shell.

3. Front axle support according to either claim 1 or claim 2, **characterised in that** the shaped metal part (19) comprises a flange (19.1) on its lower end.

4. Front axle support according to any of claims 1 to 3, **characterised in that** the shaped metal part (19) is produced by splitting a metal sleeve or a sheet metal bowl.

5. Front axle support according to any of claims 1 to 4, **characterised in that** the fastening element (21) is rigidly or detachably connected to the attachment device (16.1, 16.2).

6. Front axle support according to any of claims 1 to 5, **characterised in that** the fastening element (21) is in the form of a nut or a threaded bush.

7. Front axle support according to any of claims 1 to 6, **characterised in that** the opening (20) for receiving the fastening element (21) is formed in a cover-like metal plate (19.2) that is rigidly connected to the shaped metal part (19) .

8. Front axle support according to claim 7, **characterised in that** the metal plate (19.2) and the crossmember (4) are welded together.

9. Front axle support according to any of claims 1 to 8, **characterised in that** the shaped metal part (19) is inserted into the cavity in the crossmember (4) with radial play.

10. Front axle support according to any of claims 1 to 9, **characterised in that** the crossmember (4) has a shoulder (4.11) at the top in the region of the cavity.

11. Front axle support according to claim 10, **characterised in that** the shoulder (4.11) is defined by a ridge-shaped or bead-shaped raised portion (4.12) of the crossmember (4).

12. Front axle support according to claim 11, **characterised in that** the ridge-shaped or bead-shaped raised portion (4.12) has a curved longitudinal progression.

13. Front axle support according to any of claims 1 to 12, **characterised in that** the crossmember (4) is provided with at least two attachment devices (16.1, 16.2) of the aforementioned type.

14. Front axle support according to any of claims 1 to 13, **characterised in that** the crossmember is formed from an upper sheet metal shell (4.1) and a lower sheet metal shell (4.2).

15. Front axle support according to claim 14, **characterised in that** the shaped metal part (19) and at least one sheet metal shell and/or at least one profiled part of the crossmember (4) are made of sheet steel of different thicknesses and/or of different grades.

## Revendications

1. Support d'essieu avant (1) pour un véhicule automobile avec longerons et une traverse (4) reliant les longerons (2, 3) l'un à l'autre, où la traverse a la forme d'un corps creux et est munie d'au moins un dispositif de fixation (16.1, 16.2) pour la fixation d'un boitier de direction (15), **caractérisé en ce que** le dispositif de fixation (16.1, 16.2) se compose d'une pièce métallique de forme (19) définissant une échancrure, laquelle pièce métallique de forme est introduit dans une cavité agencée sur le côté avant ou arrière de la traverse (4) et y est soudé, est ouvert sur la face inférieure et sur une hauteur d'au moins 20 mm, et sur l'extrémité supérieure de la hauteur, présente une ouverture (20), de préférence un trou pour la réception d'un élément de fixation (21) relié ou reliable au boitier de direction.

2. Support d'essieu avant selon la revendication 1, **caractérisé en ce que** la pièce métallique de forme (19) a la forme d'une coquille de type gouttière.

3. Support d'essieu avant selon la revendication 1 ou 2, **caractérisé en ce que** la pièce métallique de forme (19) présente une bride (19.1) sur l'extrémité inférieure.

4. Support d'essieu avant selon l'une des revendications 1 à 3, **caractérisé en ce que** la pièce métallique de forme (19) est obtenue par division d'une douille métallique ou d'une coupelle métallique.

5. Support d'essieu avant selon l'une des revendications 1 à 4, **caractérisé en ce que** l'élément de fixation (21) est relié de manière fixe ou amovible au dispositif de fixation (16.1, 16.2).

6. Support d'essieu avant selon l'une des revendications 1 à 5, **caractérisé en ce que** l'élément de fixation (21) a la forme d'un écrou ou d'une douille filetée.

7. Support d'essieu avant selon l'une des revendications 1 à 6, **caractérisé en ce que** l'ouverture (20) pour la réception de l'élément de fixation (21) est formée dans une plaque métallique de forme d'un couvercle (19.2), qui est fixée à la pièce métallique de forme (19).

8. Support d'essieu avant selon la revendication 7, **caractérisé en ce que** la plaque métallique (19.2) et la traverse (4) sont soudées l'une à l'autre.

9. Support d'essieu avant selon l'une des revendications 1 à 8, **caractérisé en ce que** la pièce métallique de forme (19) est montée avec un jeu radial dans la cavité de la traverse (4).

10. Support d'essieu avant selon l'une des revendications 1 à 9, **caractérisé en ce que** la traverse (4) présente un palier (4.11) sur la face supérieure, dans la zone de la cavité.

11. Support d'essieu avant selon la revendication 10, **caractérisé en ce que** le palier (4.11) est définit par une saillie en forme de bourrelet ou tubulaire (4.12) de la traverse (4).

12. Support d'essieu avant selon la revendication 11, **caractérisé en ce que** la saillie en forme de bourrelet ou tubulaire (4.12) présente un tracé courbe.

13. Support d'essieu avant selon l'une des revendications 1 à 12, **caractérisé en ce que** la traverse (4) est munie d'au moins deux dispositifs de fixation (16.1, 16.2) du type cité.

14. Support d'essieu avant selon l'une des revendications 1 à 13, **caractérisé en ce que** la traverse (4) est formée d'une coupelle métallique supérieure (4.1) et d'une coupelle métallique inférieure (4.2).

15. Support d'essieu avant selon la revendication 14, **caractérisé en ce que** la pièce métallique de forme (19) et au moins une coupelle métallique et/ou au moins un profilé de la traverse (4) sont obtenus de tôle d'acier d'épaisseurs différentes et/ou qualités de matériau différentes.
